# EUROPÄISCHE PATENTSCHRIFT

(11) **EP 0 516 992 B1**
(45) Veröffentlichungstag und Bekanntmachung des Hinweises auf die Patenterteilung: **14.08.1996**
(21) Anmeldenummer: 92107728.5
(22) Anmeldetag: 07.05.1992
(51) Int. Cl.: B29C 47/92

(54) **Verfahren zur Bestimmung und/oder Regelung des Orientierungsgrades von in Blasfolienanlagen hergestellten Schauchfolien**
Process for determining and controlling the degree of orientation of tubular films produced by blown film apparatus
Procédé pour déterminer et régler le degré d'orientation de films tubulaires fabriqués dans des installations de soufflage

(30) Priorität: 03.06.1991 DE 4118122
(43) Veröffentlichungstag der Anmeldung: 09.12.1992
(60) Teilanmeldung: 95109569.4
(73) Patentinhaber: Windmöller & Hölscher, D-49525 Lengerich (DE)
(72) Erfinder: Sensen, Klemens, Dipl.-Ing., W-4540 Lengerich (DE); Voss, Klaus-Peter, Dipl.-Ing., W-4540 Lengerich (DE); Feistkorn, Werner, Dr. Dipl.-Ing., W-4401 Saerbeck (DE); Beckmann, Hans-Udo, Dipl.-Ing., W-4540 Lengerich (DE)
(74) Vertreter: Laufhütte, Dieter, Dr.-Ing.

(56) Entgegenhaltungen:
- EP-A- 0 171 963
- DE-A- 3 245 605
- GB-A- 2 109 591
- US-A- 4 036 557
- US-A- 4 189 288
- US-A- 4 402 656

## Beschreibung

Die Erfindung betrifft ein Verfahren zur Bestimmung und/oder Regelung des Orientierungsgrades von in Blasfolienanlagen, die aus einem Extruder mit Folienblaskopf mit Innenkühlung und Flachlege- und Abzugseinrichtungen bestehen, hergestellten Schlauchfolien, bei dem die ausgetauschte Innenkühlluftmenge, die Extruderdrehzahl, die Temperatur der extrudierten Kunststoffmasse und/oder die Abzugsgeschwindigkeit steuerbar sind.

Zwischen der Ringdüse des Folienblaskopfes und der sog. Frostlinie, die sich üblicherweise dicht unterhalb des die aufgeblasene Folienblase einfassenden Kalibrierkorbes befindet, wird der extrudierte schmelzflüssige Folienschlauch zu einer Folienblase aufgeblasen, die oberhalb der Frostlinie den Durchmesser der hergestellten Schlauchfolie aufweist. Das Aufblasen der Folienblase geschieht durch den Folienblaskopf durchsetzende Kühlluftzuführungs- und Kühlluftabführungsleitungen, wobei sich die zugeführten und abgeführten Kühlluftmengen und damit die ausgetauschten Luftmengen und neben der Kühlleistung auch der Innendruck in der Blase steuern lassen. Der durch den Folienblaskopf extrudierte Kunststoffschlauch behält zunächst im wesentlichen seinen Durchmesser bei und wird dann sektkelchförmig zu dem Enddurchmesser der Folienblase aufgeblasen, wobei die Dehnungen in der Blase an der Frostlinie, in der diese gleichsam "eingefroren" werden, als beendet betrachtet werden können. Insbesondere in dem sektkelchförmigen Aufweitungsbereich wird die Folie sowohl in Umfangsrichtung, also in ihrer Querrichtung, als auch in ihrer Längsrichtung verstreckt, was zu einer entsprechenden Orientierung der Kunststoffmoleküle führt. Während das Aufblasen des extrudierten Folienschlauches zu der Schlauchblase bereits zu einer Quer- und Längsverstreckung der Schlauchfolie führt, kann zusätzlich durch entsprechende Steuerung der Abzugsgeschwindigkeit der Schlauchfolie eine Längsverstreckung eingeleitet werden.

Die Qualität und die Festigkeitseigenschaften der hergestellten Schlauchfolie hängen ganz wesentlich von der Längs- und Querverstreckung während der Abkühlphase, insbesondere also in dem Aufweitungsbereich, beim Aufblasen ab. Hierbei ist nicht nur das Maß der Längs- und Querdehnungen, sondern insbesondere das Verhältnis der Längs- und Querdehngeschwindigkeiten von ausschlaggebender Bedeutung, das als Orientierungsgrad bezeichnet wird.

Einfluß auf das Verhältnis der Längs- und Querverstreckung sowie den Orientierungsgrad und den Durchmesser der hergestellten Schlauchfolie hat die Lage der sog. Frostlinie. Die Höhe der Frostlinie kann sich durch die unterschiedlichen Herstellungsparameter, also beispielsweise Massetemperatur, Extruderdrehzahl, ausgetauschte Kühlluftmenge, Kühllufttemperatur und Abzugsgeschwindigkeit, ändern. Darüber hinaus kann sich die Lage der Frostlinie, die grundsätzlich dicht unterhalb des Kalibrierkorbes liegen soll, schon bei einer Änderung der Raumtemperatur verändern.

Es ist bekannt, zur Regelung des Durchmessers und des Verstreckungsverhältnisses der hergestellten Schlauchfolien die Höhe der Frostlinie relativ zum Folienblaskopf bzw. zum Kalibrierkorb zu steuern oder zu regeln.

Bei den meisten Blasfolienanlagen wird die Lage der Frostlinie lediglich durch das Bedienungspersonal visuell überwacht. Nach der Erfahrung des Bedienungspersonals werden dann entsprechend der beobachteten Höhe der Frostlinie Einstellungen der Höhe des Kalibrierkorbes, der zu- und abgeführten Innenkühlluftmenge und/oder in der Ausstoßleistung des Extruders vorgenommen. Eine derartige Einstellung ist jedoch erheblichen Fehlerquellen unterworfen, da sie von der Geschicklichkeit und den Erfahrungen des Bedienungspersonals abhängt.

Aus den DE-PS 27 21 609 und 28 31 212 sind Verfahren zur Regelung von Blasfolienanlagen bekannt, bei denen insbesondere zur Erzielung einer gleichen vorgegebenen Folienbreite die Lage der Frostlinie gemessen und entsprechend den gemessenen Abweichungen der Frostlinie Stellglieder beaufschlagt werden, die Einfluß auf die Foliendicke und/oder den Schlauchfoliendurchmesser nehmen. Ein besonderes Problem dieser bekannten Verfahren liegt aber in den Vorrichtungen und Sensoren zur Erfassung der Frostlinie.

Zur Erfassung der Frostlinie sind Thermosensoren, die die Folientemperatur in Bereichen unter- und oberhalb der Frostlinie durch Messung der Infrarotstrahlung erfassen, bekannt. Diese Sensoren sind jedoch sehr verschmutzungsempfindlich, so daß Betriebsstöungen auftreten können. Thermosensoren sind schließlich zur Messung von sehr dünnen transparenten Folien ungeeignet.

Bekannt sind weiterhin Verfahren, bei denen aus der Energiebilanz unter Berücksichtigung des Rohstoffeinsatzes, des Ausstosses, der Breite und der Dicke der Folie sowie aus den Kühllufttemperaturen und weiteren Einflußgrößen die Lage der Frostlinie berechnet wird. Diese Verfahren sind jedoch ungenau, da sie von häufig unbekannten und daher nur schwer abschätzbaren Rohstoffkenndaten abhängig sind. Weiterhin läßt sich der Einfluß des Wärmeübergangskoeffizienten von der Luft zur Folie nur schwer erfassen. Im Ergebnis ist daher keine für die Praxis ausreichend genaue Rechnung möglich.

Aufgabe der Erfindung ist es, ein Verfahren der eingangs angegebenen Art zu schaffen, das sich in der Praxis bei guten Ergebnissen einfach und störungsfrei durchführen läßt.

Erfindungsgemäß wird diese Aufgabe bei einem Verfahren der gattungsgemäßen Art dadurch gelöst, daß die Längs- und Querdehngeschwindigkeiten der Folie im Aufweitungsbereich der Blase gemessen und das gemessene Verhältnis auf einen gewünschten vorgegebenen Sollwert eingestellt wird. Nach dem erfindungsgemäßen Verfahren wird somit der Orientierungsgrad durch Messung bestimmt, wobei sich dann aus dem eingestellten Orientierungsgrad die zugehörige Blasenform ergibt. Durch die Bestimmung des Orientierungsgrades lassen sich Folien mit vorbestimmten besonderen Qualitäten und Festigkeitseigenschaften herstellen.

Nach einer erfinderischen Weiterbildung ist vorgesehen, daß die Längs- und Querdehnungsgeschwindigkeiten des extrudierten Folienschlauches bzw. das Verhältnis dieser Geschwindigkeiten mit einem Laser-Doppler-Velociometer gemessen werden. Derartige Laser-Doppler-Velociometer (LDV) werden beispielsweise von der Firma Polytec GmbH in D-7517 Waldbronn hergestellt und angeboten. In derartigen Laser-Doppler-Velociometer wird das Laserlicht in zwei Strahlen gleicher Intensität geteilt. Die beiden Laserstrahlen werden mit einer Linse im LDV Meßvolumen zum Schnitt gebracht und erzeugen dort ein Streifenmuster, das von den konstruktiven und destruktiven Interferenzen der kohärenten Strahlen herrührt. Ein Partikel, das sich durch dieses Meßvolumen bewegt, erzeugt ein Streulichtsignal (Dopplerburst), dessen Frequenz proportional der Geschwindigkeit des Teilchens ist. Das LDV stellt daher eine absolute Meßmethode dar, die unabhängig von umgebungsbedingten und anderen Einflüssen ist. Das LDV ist daher besonders gut geeignet, Geschwindigkeiten an bewegten Oberflächen von extrudierten Schlauchfolien zu messen. Weiterhin sind faseroptische LDV-Systeme zur simultanen Messung von zwei Geschwindigkeitskomponenten verfügbar, so daß diese Systeme zur Durchführung des erfindungsgemäßen Verfahrens die Messung der Längs- und Querdehngeschwindigkeiten an der extrudierten Schlauchfolie ermöglichen.

Ein Ausführungsbeispiel der Erfindung wird nachstehend anhand der Zeichnung näher erläutert. In dieser zeigt
- Fig. 1: eine schematische Darstellung einer Blasfolienanlage mit Extruder, Flachlegeeinrichtung und Aufwickeleinrichtung, bei der der Orientierungsgrad im Aufweitungsbereich der Schlauchfolie durch ein Laser-Doppler-Velociometer erfaßt wird,
- Fig. 2: einen Abschnitt einer extrudierten Schlauchfolie mit einem das Geschwindigkeitsprofil erfassenden Laser-Doppler-Velociometer und
- Fig. 3: eine Darstellung der Längs- und Querdehnungsgeschwindigkeiten im Aufweitungsbereich einer Schlauchfolie.

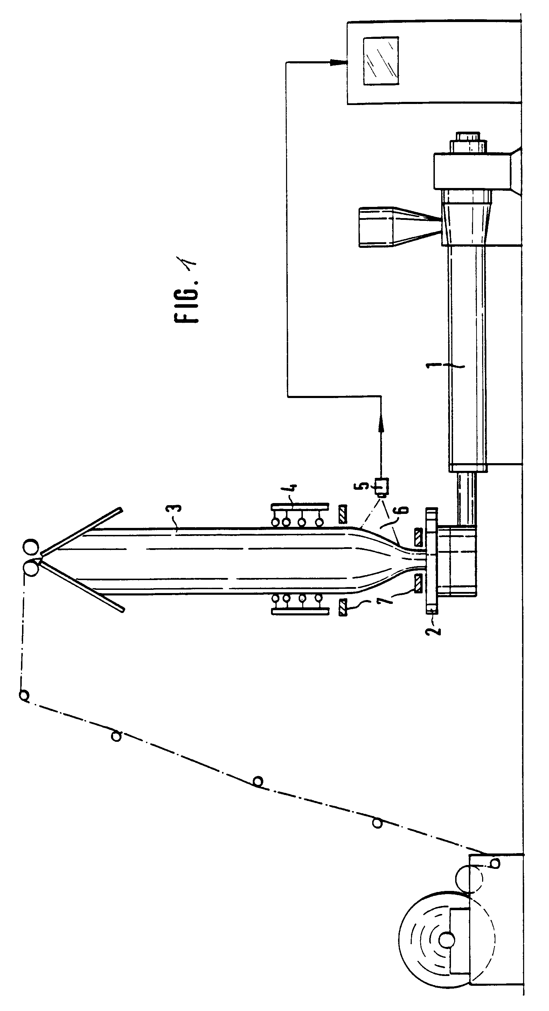

Aus Fig. 1 ist der sektkelchförmige Aufweitungsbereich einer extrudierten Kunststoffschlauchfolie 3 ersichtlich. In dem sektkelchförmigen Aufweitungsbereich wird die Schlauchfolie mit unterschiedlichen Geschwindigkeiten sowohl in Längsrichtung als auch in Querrichtung verstreckt.

Nach Fig. 1 wird das Geschwindigkeitsprofil im Aufweitungsbereich der Schlauchfolie durch ein Laser-Doppler-Velociometer 5 (LDV) erfaßt. Die in Fig. 1 schematisch dargestellte Blasfolienanlage ist grundsätzlich üblicher Art, wobei die den Folienblaskopf 2 durchsetzenden Leitungen zum Zu- und Abführen der Kühlluft, die auch den Kühlluftdurchsatz und damit den Innendruck der Schlauchblase bestimmen, nicht dargestellt sind. Der Extruder 1 und der Folienblaskopf 2 sind üblicher Bauart. Der Kalibrierkorb 4 ist in nicht dargestellter Weise höhenverstellbar an einem nicht dargestellten Gestell angeordnet. Der Meßkopf 5 des LDV erfaßt die Folienblase 3 in dem Aufweitungsbereich, wobei das Meßfeld 6 durch Führungselemente 7 eingefaßt ist, die der Beruhigung der Luft und der Blase dienen.

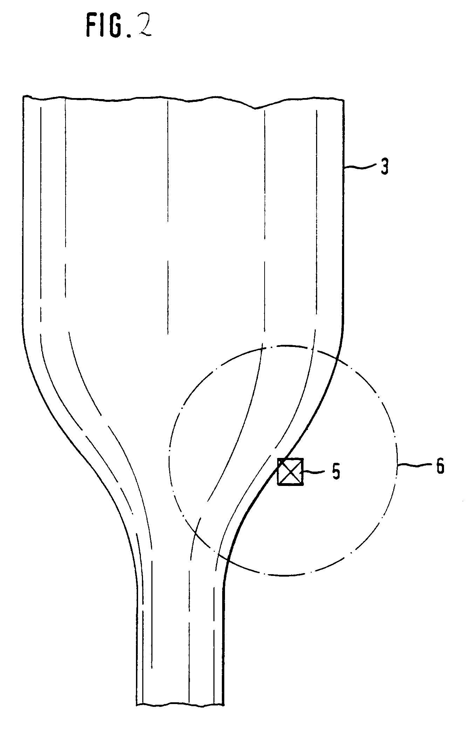

Der Lasermeßkopf 5 tastet dabei, wie aus Fig. 2 ersichtlich, tangential die Schlauchblase 3 im Aufweitungsbereich 6 ab.

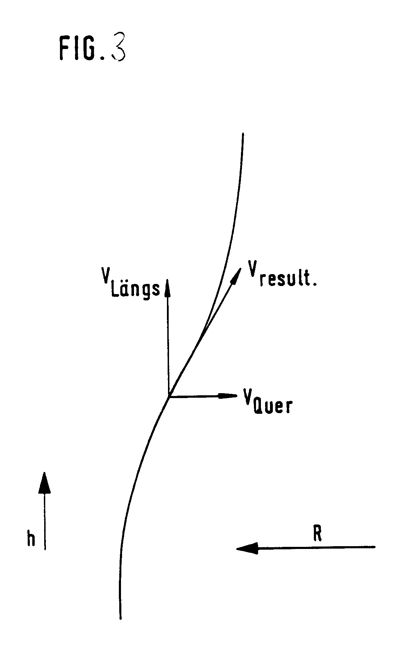

Das LDV erfaßt, wie aus Fig. 3 ersichtlich ist, die Längsdehngeschwindigkeiten V längs und die Querdehngeschwindigkeiten V quer nach Betrag und Richtung und liefert darüber hinaus die resultierende Geschwindigkeit V result nach Richtung und Größe.

## Patentansprüche

1. Verfahren zur Bestimmung und/oder Regelung des Orientierungsgrades von in Folienblasanlagen, die aus einem Extruder (1) mit Folienblaskopf (2) mit Innenkühlung und Flachlege- und Abzugseinrichtungen bestehen, hergestellten Schlauchfolien (3),
bei dem die ausgetauschte Innenkühlluftmenge, die Extruderdrehzahl, die Temperatur der extrudierten Kunststoffmasse und/oder die Abzugsgeschwindigkeit steuerbar sind,
**dadurch gekennzeichnet,**
daß die Längs- und Querdehngeschwindigkeiten der Folie im Aufweitungsbereich (6) der Blase gemessen und das gemessene Verhältnis auf einen gewünschten vorgegebenen Sollwert eingestellt wird.

2. Verfahren nach Anspruch 1, dadurch gekennzeichnet, daß die Längs- und Querdehngeschwindigkeiten bzw. deren Verhältnis mit einem Laser-Doppler-Velociometer (5) gemessen werden.

## Claims

1. Process for determining and/or controlling the degree of orientation of tubular films (3) produced in blown film installations which comprise an extruder (1) having a blown film die (2) with internal cooling and collapsing and taking-off devices, in which process the amount of exchanged internal cooling air, the extruder speed, the temperature of the extruded polymer melt and/or the taking-off rate are controllable, characterized in that the longitudinal and transverse expansion rates of the film in the expansion region (6) of the bubble are measured and the measured ratio is set to a desired predetermined set value.

2. Process according to Claim 1, characterized in that the longitudinal and transverse expansion rates or their ratio are measured by a laser Doppler velocimeter (5).

## Revendications

1. Procédé pour déterminer et/ou régler le degré d'orientation de feuilles tubulaires (3) fabriquer dans des installations de soufflage de feuilles composé d'une extrudeuse (1) avec une tête (2) de soufflage de feuilles, à refroidissement interne et de dispositifs de mis à plat et d'extraction,
selon lequel la quantité de l'air de refroidissement interne échangé, le nombre de tours de l'extrudeuse, la température de la masse de matière de plastique extrudée et/ou la vitesse d'extraction sont réglables,
caractérisé en ce que,
les vitesses d'extension longitudinale et transversale de la feuille sont mesurées dans la zone d'élargissement de la bulle et le rapport mesuré est ajusté à une valeur de consigne prédéterminée souhaitée.

2. Procédé selon la revendication 1, caractérisé en ce que les vitesses d'extension longitudinale et transversale où leur rapport sont mesuré à l'aide' d'un vélocimètre-Doppler-Laser (5).
